# EUROPEAN PATENT APPLICATION

(11) **EP 4 597 954 A1**
(43) Date of publication of application: **06.08.2025**
(21) Application number: 22960186.9
(22) Date of filing: 29.09.2022
(51) Int. Cl.: H04L 27/00

(54) **METHOD AND APPARATUS FOR TRIGGERING INTER-CELL MOBILITY PROCESS**

(71) Applicant: FUJITSU LIMITED, Kawasaki-shi, Kanagawa 211-8588 (JP)
(72) Inventor: JIA, Meiyi, Beijing 100022 (CN); YI, Su, Beijing 100022 (CN); WANG, Xin, Beijing 100022 (CN)
(74) Representative: Haseltine Lake Kempner LLP
(86) International application number: PCT/CN2022/122944
(87) International publication number: WO 2024/065551

(57) **Abstract**

Embodiments of the present disclosure provide a triggering method and a triggering apparatus for an inter-cell mobility procedure, the method including: a first network device receives measurement-related information, the measurement-related information including one of the following: an L1 measurement result by performing L1 measurement on a frequency of an inter-frequency candidate target cell or on an inter-frequency candidate target cell by a terminal equipment, an indication from a second network device based on an L3 measurement result by performing L3 measurement on a frequency of an inter-frequency candidate target cell or on an inter-frequency candidate target cell by the terminal equipment, or an L1 measurement result associated with a candidate target cell; and the first network device, based on the measurement-related information, triggers anL1 or L2 based inter-cell mobility procedure from a serving cell to a target cell. According to the embodiments of the present disclosure, it can ensure that an L1 or L2 based inter-cell mobility mechanism is capable of supporting inter-frequency scenarios, so as to ensure that a network provide services to a terminal by using a cell with the best quality, thereby to guarantee quality of service of the terminal and improve network throughput.

## Description

### TECHNICAL FIELD

Embodiments of the present disclosure relate to the technical field of communications.

### BACKGROUND

Network-controlled mobility is applicable to connected terminals, and may be divided into two types of mobility, i.e., cell-level mobility and beam-level mobility.

Cell-level mobility requires that handover is triggered by explicit radio resource control (RRC) signaling, i.e., the handover is triggered via the RRC signaling.

RRC-triggered handover mechanism requires that a user equipment (UE) at least reset a media access control (MAC) entity and reestablish radio link control (RLC), and supports handover of RRC management with and without a packet data convergence protocol (PDCP) entity reestablishment.

For data radio bearer (DRBs) using an RLC acknowledged mode (AM), the PDCP may be reestablished with a security key update or initiate a data recovery process "without key update". For DRBs using an RLC unacknowledged mode (UM), the PDCP may be reestablished with a security key update, or "no key update" remains unchanged. For signalling radio bearers (SRBs), the PDCP may remain "no key update" unchanged, discard stored PDCP packet data units (PDUs) /service data units (SDUs), or is reestablished with the security key update.

On the other hand, when a terminal moves from a coverage area of a cell to a coverage area of another cell, a serving cell change needs to be performed at a point. Currently, the serving cell change is triggered by layer 3 (L3) measurement and completed by RRC signaling, a triggered reconfiguration with synchronisation is changed for a primary cell (PCell) and a primary secondary cell (PSCell), and release of secondary cells (SCells), when applicable, is increased. All situations involve full L2 (and L1) resetting, resulting in longer delay, greater overhead and longer interruption duration than beam handover mobility. Target of L1/L2 mobility enhancement is to ensure a serving cell change via L1/L2 signalling, so as to reduce delay, overhead and interruption duration.

In order to reduce a mobility delay, a mechanism and process of L1/L2 based inter-cell mobility include the following content:
configuration and maintenance of multiple candidate cells to allow rapid application of configuration of candidate cells;
for possible applicable scenarios, a dynamic handover mechanism between L1/L2 signaling based candidate serving cells (including special cells and secondary cells);
L1 enhancement of inter-cell beam management, including L1 measurement and reporting, and beam indication;
timing advance management; and
Centralized unit-distributed unit (CU-DU) interface signalling to support L1/L2 mobility.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

The inventor finds that for a neighboring cell with a different frequency from a current serving cell, a terminal cannot perform L1 measurement and reporting, which makes that a network is unable to hand over the terminal to this inter-frequency neighboring cell even if the quality of this neighboring cell is better than that of other intra-frequency neighboring cells, resulting in that the terminal operates on a non-optimal cell, thereby reducing a network capacity.

For at least one of the above problems or other similar problems, embodiments of the present disclosure provide a triggering method and a triggering apparatus for an inter-cell mobility procedure, to guarantee service quality of the terminal and improve network throughput.

According to an aspect of the embodiments of the present disclosure, a triggering apparatus for an inter-cell mobility procedure is provided, configured in a network device, the apparatus comprising:
a receiving unit configured to receive measurement-related information, the measurement-related information including one of the following: an L1 measurement result by performing L1 measurement on a frequency of an inter-frequency candidate target cell or on an inter-frequency candidate target cell by a terminal equipment, an indication from a second network device based on an L3 measurement result by performing L3 measurement on a frequency of an inter-frequency candidate target cell or on an inter-frequency candidate target cell by the terminal equipment, or an L1 measurement result associated with a candidate target cell; and
a triggering unit configured to, based on the measurement-related information, trigger an L1 or L2 based inter-cell mobility procedure from a serving cell to a target cell.

According to another aspect of the embodiments of the present disclosure, a triggering apparatus for an inter-cell mobility procedure is provided, configured in a terminal equipment, the apparatus comprising:
a measuring unit configured to perform L1 measurement on a frequency of an inter-frequency candidate target cell or on an inter-frequency candidate target cell; and
a transmitting unit configured to report an L1 measurement result to a network device, the L1 measurement result being used for the network device to trigger an L1 or L2 based inter-cell mobility procedure of the terminal equipment from a serving cell to a target cell.

According to a further aspect of the embodiments of the present disclosure, a triggering apparatus for an inter-cell mobility procedure is provided, configured in a terminal equipment, the apparatus comprising:
a transmitting unit configured to report an L3 measurement result of an inter-frequency candidate target cell to a second network device, the L3 measurement result being used for the second network device to indicate a first network device to trigger an L1 or L2 based inter-cell mobility procedure from a serving cell to a target cell, the second network device being a central unit (CU) in a communication system.

According to a further aspect of the embodiments of the present disclosure, a triggering apparatus for an inter-cell mobility procedure is provided, configured in a terminal equipment, the apparatus comprising:
a transmitting unit configured to report an L1 measurement result to a network device, the L1 measurement result being associated with an inter-frequency candidate target cell and used for the network device to trigger an L1 or L2 based inter-cell mobility procedure from a serving cell to a target cell.

One of advantageous effects of the embodiments of the present disclosure lies in: according to the embodiments of the present disclosure, it can ensure that an L1 or L2 based inter-cell mobility mechanism is capable of supporting inter-frequency scenarios, in this way, a network can provide services to a terminal by using a cell with the best quality, thereby to guarantee quality of service of the terminal and improve network throughput.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a process of an inter-gNB-DU mobility within an gNB-CU for an intra-NR;
FIG. 2 is a schematic diagram of a procedure of an inter-gNB handover;
FIG. 3 is a schematic diagram of a procedure of an intra-AMF/UPF handover;
FIG. 4 is a schematic diagram of L1/L2 based inter-cell mobility;
FIG. 5 is a schematic diagram of a deployment scenario of a NG-RAN in the embodiments of the present disclosure;
FIG. 6 is a schematic diagram of a deployment scenario of an IAB in the embodiments of the present disclosure;
FIG. 7 is a schematic diagram of a triggering method for an inter-cell mobility procedure in the embodiments of the present disclosure;
FIG. 8 is another schematic diagram of a triggering method for an inter-cell mobility procedure in the embodiments of the present disclosure;
FIG. 9 is a further schematic diagram of a triggering method for an inter-cell mobility procedure in the embodiments of the present disclosure;
FIG. 10 is another schematic diagram of a triggering method for an inter-cell mobility procedure in the embodiments of the present disclosure;
FIG. 11 is a schematic diagram of a triggering apparatus for an inter-cell mobility procedure in the embodiments of the present disclosure;
FIG. 12 is another schematic diagram of a triggering apparatus for an inter-cell mobility procedure in the embodiments of the present disclosure;
FIG. 13 is a further schematic diagram of a triggering apparatus for an inter-cell mobility procedure in the embodiments of the present disclosure;
FIG. 14 is another schematic diagram of a triggering apparatus for an inter-cell mobility procedure in the embodiments of the present disclosure;
FIG. 15 is a composition schematic diagram of a network device in the embodiments of the present disclosure;
FIG. 16 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), an Integrated Access and Backhaul (IAB) node or an IAB-DU or IAB-donor. And the term "base station" may include some or all functions of a base station, each base station may provide communication coverage to a specific geographic region. The term "cell" may refer to a base station and/or its coverage area, which depends on the context in which this term is used. In a case where there is no confusion, the terms "cell" and " base station " are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT (Mobile Terminal), a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Currently, an intra-gNB-DU mobility procedure is used for a situation in which a terminal is moved from one cell to another cell in the same gNB-DU, or is used for a situation in which handover is performed within a cell. This process is supported by a UE context modification process. The UE context modification process may be initiated by a gNB-CU.

When a intra gNB-DU handover (inter-cell or intra-cell) is performed, the gNB-CU provides the gNB-DU with a new UL GTP TEID (uplink GPRS tunneling protocol tunnel end point identifier), and the gNB-DU provides the gNB-CU with a new DL GTP TEID (downlink GTP TEID, downlink GPRS tunneling protocol tunnel end point identifier). Until RLC is reestablished, the gNB-DU will continue to use previous UL GTP TEIDs to transmit UL PDCP PDUs to the gNB-CU, and then starts using the new UL GTP TEID to perform transmission. Until PDCP reestablishment or PDCP data recovery is performed, the gNB-CU will continue to use previous DL GTP TEID to transmit DL PDCP PDUs to the gNB-DU, and then starts using the new DL GTP TEID to perform transmission.

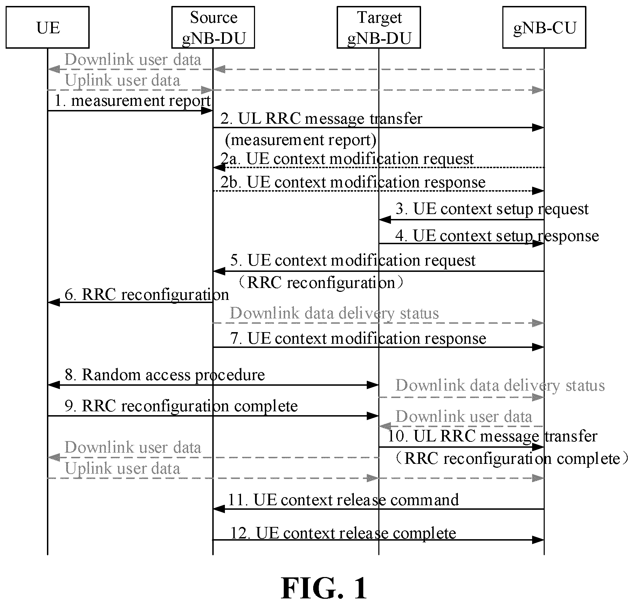

In addition, an inter-gNB-DU mobility procedure is used for a situation in which a terminal is moved from one gNB-DU to another gNB-DU in the same gNB-CU. FIG. 1 is a schematic diagram of an inter-gNB-DU mobility procedure for an intra-NR. As shown in FIG. 1, the process includes the following steps:
1. A UE transmits a *MeasurementReport* message to a source gNB-DU.
2. The source gNB-DU transmits a *UL RRC MESSAGE TRANSFER* message to a gNB-CU, to convey the received *MeasurementReport* message.
2a. The gNB-CU may transmit a UE CONTEXT MODIFICATION REQUEST message to the source gNB-DU, to query the latest configuration.
2b. The source gNB-DU responds with a UE CONTEXT MODIFATION RESPONSE message that includes full configuration information.
3. The gNB-CU transmits a UE CONTEXT SETUP REQUEST message to a target gNB-DU, to create a UE context and setup one or more data bearers. The UE CONTEXT SETUP REQUEST message includes *HandoverPreparationInformation.* In case of NG-RAN (NG radio access network, NG radio access network/5G radio access network) sharing, the gNB-CU includes a serving PLMN (public land mobile network, public land mobile (communication) network) ID (for SNPN (stand-alone non-public network), serving SNPN ID).
4. The target gNB-DU responds to the gNB-CU with a UE CONTEXT SETUP RESPONSE message.
5. The gNB-CU transmits a UE CONTEXT MODIFICATION REQUEST message to the source gNB-DU, which includes a generated *RRCReconfiguration* message, and indicates to stop data transmission for the UE. The source gNB-DU also transmits a downlink data delivery status frame, to inform the gNB-CU about the unsuccessfully transmitted downlink data to the UE.
6. The source gNB-DU forwards the received *RRCReconfiguration* message to the UE.
7. The source gNB-DU responds to the gNB-CU with a UE CONTEXT MODIFATION RESPONSE message.
8. A random access procedure is performed at the target gNB-DU by the UE. The target gNB-DU transmits a downlink data delivery status frame to inform the gNB-CU. A downlink packet (which may be included in PDCP PDUs that are not successfully transmitted in the source gNB-DU) is transmitted from the gNB-CU to the target gNB-DU.
   Note: it is up to gNB-CU implementation whether to start transmitting downlink user data to the gNB-DU before or after reception of the downlink data delivery status.
9. The UE responds to the target gNB-DU with a *RRCReconfigurationComplete* message.
10. The target gNB-DU transmits a UL RRC MESSAGE TRANSFER message to the gNB-CU, to convey the received *RRCReconfigurationComplete* message. The downlink packet is transmitted to the UE. Also, an uplink packet is transmitted from the UE and is forwarded to the gNB-CU through the target gNB-DU.
11. The gNB-CU transmits a UE CONTEXT RELEASE COMMAND message to the source gNB-DU.
12. The source gNB-DU releases the UE context, and responds to the gNB-CU with a UE CONTEXT RELEASE COMPLETE message.

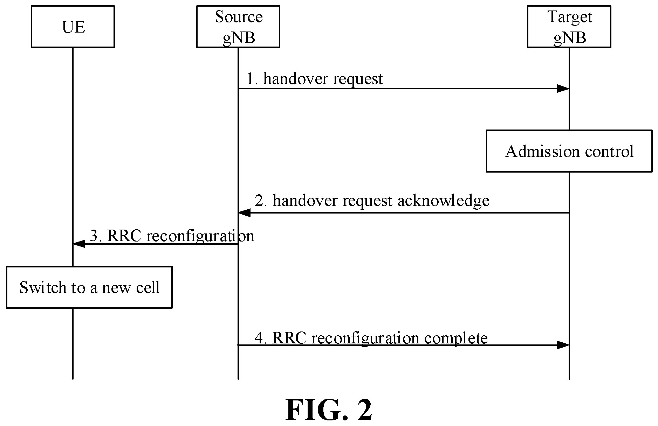

In addition, the inter-gNB-CU mobility procedure is used for inter-gNB handover. FIG. 2 is a schematic diagram of an inter-gNB handover procedure. As shown in FIG. 2, the procedure includes the following steps:
1. A source gNB initiates handover, and issues a HANDOER REQUEST over an Xn interface.
2. A target gNB performs admission control, and provides a new RRC configuration as a part of the HANDOVER REQUEST ACKNOWLEDGE.
3. The source gNB provides the RRC configuration to a UE by forwarding an *RRCReconfiguration* message received in the HANDOVER REQUEST ACKNOWLEDGE. The *RRCReconfiguration* message includes at least a cell ID and all information required for accessing a target cell, so that the UE may access the target cell without reading system information. For some cases, the information required for contention-based and contention-free random access can be included in the *RRCReconfiguration* message. Access information to the target cell may include beam-specific information (if any).
4. The UE moves an RRC connection to the target gNB, and replies with *RRCReconfigurationComplete.*

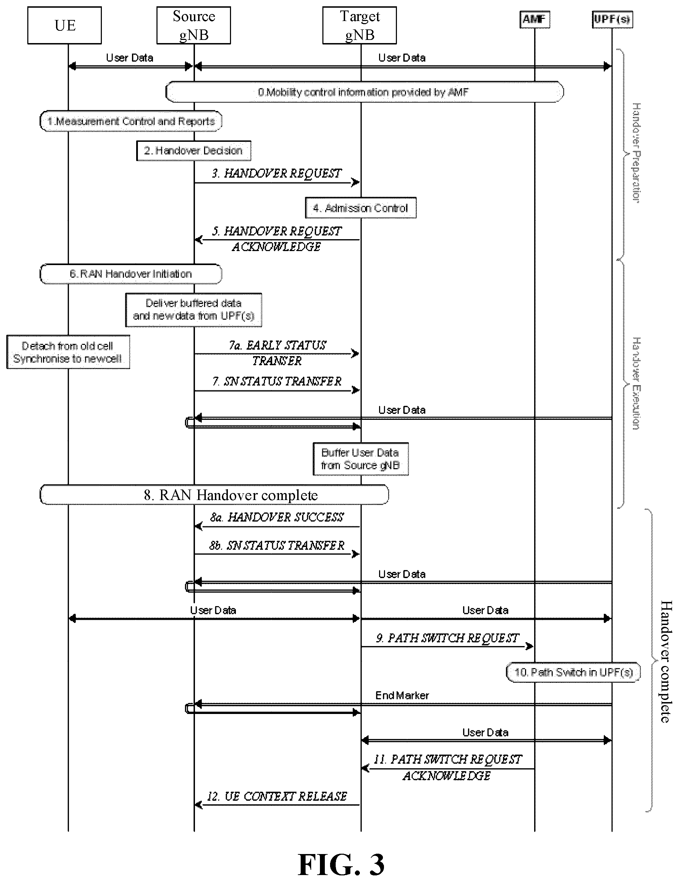

FIG. 3 is a schematic diagram of an intra-AMF (Access and Mobility Management Function)/UPF (User Plane Function) handover procedure. As shown in FIG. 3, the procedure includes the following steps:
0. UE context within a source gNB contains information regarding roaming and access restrictions, which were provided either at connection establishment or at the last TA (Timing Advance) update.
1. The source gNB configures a UE measurement procedure and a UE report according to a measurement configuration.
2. The source gNB decides to handover the UE based on *MeasurementReport* and RRM (Radio Resource Management) information.
3. The source gNB issues a Handover Request message to a target gNB passing a transparent RRC container with necessary information to prepare the handover at a target side. The information include at least a target cell ID, KgNB*, a C-RNTI (Cell Radio Network Temporary Identifier) of a UE in the source gNB, RRM configuration (including UE inactive time), a basic AS (Access Stratum) configuration (including *antenna Info* and *DL Carrier Frequency*), a mapping rule of a current QoS (Quality of Service) flow to DRB applied to the UE, SIB1 from the source gNB, UE capabilities for different RATs (Radio Access Technology), PDU session related information, and may include UE reported measurement information including beam related information (if available). The PDU session related information includes slice information and QoS flow-level QoS profile(s). The source gNB may also request DAPS (Dual Active Protocol Stack) handover for one or more DRBs.
   Note 1: after issuing a handover request, the source gNB should not reconfigure the UE, including performing reflective QoS flow to DRB mapping.
4. Admission control may be performed by the target gNB. Slice-aware admission control should be performed if the slice information is transmitted to the target gNB. If a PDU session is associated with an non-supported slice, the target gNB should reject such PDU session.
5. The target gNB prepares the handover with L1/L2 and transmits HANDOVER REQUEST ACKNOWLEDGE to the source gNB, which includes a transparent container to be transmitted to the UE as an RRC message to perform the handover. The target gNB also indicates if a DAPS handover is accepted.
   Note 2: as soon as the source gNB receives the HANDOVER REQUEST ACKNOWLEDGE, or as soon as the transmission of a handover command transmission is initiated in a downlink, data forwarding may be initiated.
6. The source gNB triggers Uu handover by transmitting an *RRCReconfiguration* message to the UE, containing information required to access a target cell: at least a target cell ID, a new C-RNTI, and a target gNB security algorithm identifier for a selected security algorithm. It can also include a set of dedicated RACH (Random Access Channel) resources, association between the RACH resources and SSB(s) (Synchronization Signal Block), association between the RACH resources and UE-specific CSI-RS (Channel State Information-Reference Signal) configuration(s), common RACH resources, and system information of the target cell, etc.
7. For a DRB not configured with DAPS, the source gNB transmits an SN STATUS TRANSFER message to the target gNB to convey an uplink PDCP SN (Sequence Number) receiver status and a downlink PDCP SN transmitter status (i.e., RLC AM) of the DRB for which a PDCP status preservation applies. The uplink PDCP SN receiver status includes at least a PDCP SN of a first missing UL PDCP SDU, and may include a bitmap of a receive status of an out of sequence UL PDPP SDUs that the UE needs to retransmit in a target cell, (if any). The downlink PDCP SN transmitter status indicates a next PDCP SN that the target gNB shall assign to a next PDCP SN, not having a PDCP SN yet.
8. The UE synchronizes to the target cell, and completes an RRC handover procedure by transmitting an *RRCReconfigurationComplete* message to the target gNB. In the case of DAPS handover, the UE does not detach from a source cell upon receiving the *RRCReconfiguration* message. The UE releases source resources and configurations and stops DL/UL reception/transmission with a source upon receiving explicit release from a target node.
8a/b. In the case of the DAPS handover, the target gNB transmits a HANDOVER SUCCESS message to the source gNB to informs that the UE has successfully accessed the target cell. In return, the source gNB transmits an SN STATUS TRANSFER message for a DRB configured with DAPS for which the description in step 7 applies, and the normal data forwarding follows relevant technologies.
   Note 7: The uplink PDCP SN receiver status and the downlink PDCP SN transmitter status are also conveyed for a DRB with RLC-UM in the SN STATUS TRANSFER message in step 8b if configured with DAPS.
9. The target gNB transmits a PATH SWITCH REQUEST message to the AMF to trigger a 5GC (5G core network) to switch a DL data path towards the target gNB, and to establish an NG-C interface (NG control plane interface) instance towards the target gNB.
10. 5GC switches the DL data path towards the target gNB. The UPF transmits one or more "end marker" packets on an old path to the source gNB per PDU session/tunnel and then can release any U-plane (user plane) /TNL (Transport Network Layer) resource towards the source gNB.
11. The AMF confirms a PATH SWITCH REQUST message with a PATH SWITCH REQUEST ACKNOWLEDGE message.
12. Upon reception of the PATH SWITCH REQUEST ACKNOWLEDGE message from the AMF, the target gNB transmits UE CONTEXT RELEASE to inform the source gNB about the success of the handover. The source gNB can then release radio and C-plane (control plane) related resources associated to the UE context. Any ongoing data forwarding may continue.

The inventor finds that for L1/L2 based inter-cell mobility, it is assumed that L1/L2 mobility is triggered by L1 measurement. Measurement of handover preparation may be based on L3 measurement. L1/L2 based inter-cell mobility procedure is applicable to intra-frequency and inter-frequency scenarios. However, since current L1 measurement does not support inter-frequency non-serving cell/neighboring cell measurements, inter-frequency L1/L2 mobility cannot be triggered by L1 measurement.

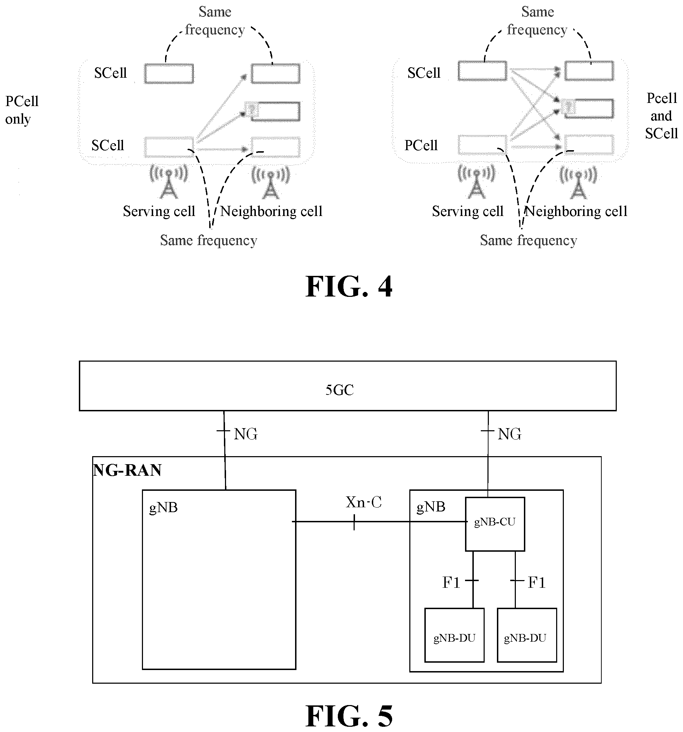

FIG. 4 is a schematic diagram of L1/L2 based inter-cell mobility. As shown in FIG. 4, for three neighboring cells on a carrier, one of which is of intra-frequency as a current PCell and one of which is of intra-frequency as a current SCell, the terminal is capable of performing L1 measurement of these two cells, but the other cell is not of intra-frequency as a current serving cell, so the terminal cannot perform L1 measurement and reporting for it. This makes it impossible for a network to hand over the terminal to this cell even if quality of this cell is better than that of the other two neighboring cells. In this way, the terminal may operate on a non-optimal cell, which reduces network capacity.

For at least one of the above problems, the present disclosure is proposed, and the embodiments of the present disclosure are described in combination with the drawings and the specific implementations.

In the embodiments of the present disclosure, scenarios supported by the L1/L2 based inter-cell mobility include but are not limited to: an inter-DU scenario, an intra-DU scenario, a handover scenario, and a DC (Dual Connectivity) scenario (optional). The handover scenario, i.e., PCell mobility/change, relates to a non-CA (carrier aggregation) scenario (i.e. only PCell) and a CA scenario (i.e. PCell and SCell(s)), including: a scenario where a target PCell/target SCell(s) is/are not a current serving cell, that is, a CA→CA scenario in which a PCell changes; a scenario where the target PCell is a current SCell (optional); a scenario where the target SCell is a current PCell (optional). In addition, the DC scenario is e.g. a scenario in which a PSCell changes.

In the embodiments of the present disclosure, the source cell and the target cell may be synchronous or asynchronous, may be of the same frequency or different frequency, and may operate on FR1 (frequency range 1) and FR2 (frequency range 2).

FIG. 5 is a schematic diagram of a deployment scenario of a NG-RAN in the embodiments of the present disclosure. As shown in FIG. 5, the NG-RAN includes a group of gNBs connected to 5GC via a NG interface. The gNBs may be interconnected via an Xn interface. One gNB may include one gNB-CU and one or more gNB-DU(s), one gNB-CU and one gNB-DU are connected via an F1 interface, and one gNB-DU may only be connected to one gNB-CU.

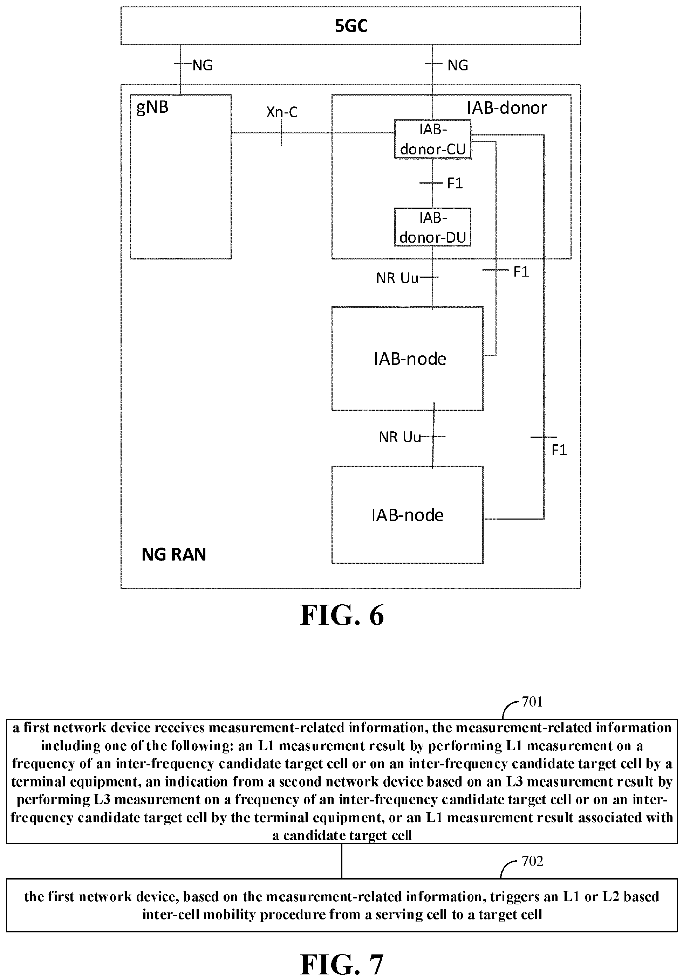

FIG. 6 is a schematic diagram of a deployment scenario of an IAB in the embodiments of the present disclosure. As shown in FIG. 6, the NG-RAN is wirelessly connected to a gNB capable of serving IAB-nodes via IAB-nodes, called an IAB-donor to support an IAB. The IAB-donor includes one IAB-donor-CU and one or more IAB-donor-DU(s).

In the embodiments of the present disclosure, all functions defined for a gNB-DU also apply to IAB-DUs and IAB-donor-DUs, all functions defined for a gNB-CU also apply to IAB-donor-CUs, and all functions defined for a UE also apply to IAB-MTs, unless otherwise specified.

### Embodiments of a first aspect

Embodiments of the present disclosure provide a triggering method for an inter-cell mobility procedure, which is described from a network device side.

FIG. 7 is a schematic diagram of a triggering method for an inter-cell mobility procedure in the embodiments of the present disclosure. As shown in FIG. 7, the method includes:
701, a first network device receives measurement-related information, the measurement-related information including one of the following: an L1 measurement result by performing L1 measurement on a frequency of an inter-frequency candidate target cell or on an inter-frequency candidate target cell by a terminal equipment, an indication from a second network device based on an L3 measurement result by performing L3 measurement on a frequency of an inter-frequency candidate target cell or on an inter-frequency candidate target cell by the terminal equipment, or an L1 measurement result associated with a candidate target cell; and
702, the first network device, based on the measurement-related information, triggers an L1 or L2 based inter-cell mobility procedure from a serving cell to a target cell.

It should be noted that the above FIG. 7 only schematically describes the embodiments of the present disclosure, but the present disclosure is not limited to this. For example, an execution order of each operation may be adjusted appropriately, moreover other some operations may be increased or operations therein may be reduced. Persons skilled in the art may make appropriate modifications according to the above contents, not limited to the records in the above FIG. 7.

In the above embodiments, a network device triggers an L1 or L2 based inter-cell mobility procedure from a serving cell to a target cell based on an L1 measurement result by performing L1 measurement on a frequency of an inter-frequency candidate target cell or on an inter-frequency candidate target cell by a terminal equipment, or based on L3 measurement and measurement report, or based on an L1 measurement result of a cell associated with a candidate target cell (i.e., an L1 measurement result associated with a candidate target cell), thereby it can ensure that an L1 or L2 based inter-cell mobility mechanism can support inter-frequency scenarios, so as to ensure that a network provides services to a terminal by using a cell with best quality, thus guaranteeing service quality of the terminal and improving network throughput.

In some embodiments, the first network device transmits first indication information to a terminal equipment, the first indication information indicating the terminal equipment to perform L1 measurement on a frequency of the inter-frequency candidate target cell or on the inter-frequency candidate target cell. Behaviors of the terminal equipment will be described in later embodiments.

In some embodiments, the first network device transmits second indication information to a terminal equipment, the second indication information indicating the terminal equipment to perform L1 measurement by using an autonomous interval. For the terminal equipment, it may perform L1 measurement on a frequency of an inter-frequency candidate target cell or on an inter-frequency candidate target cell by using an autonomous interval, according to an indication from the first network device.

For example, when receiving the second indication information, the terminal equipment performs L1 measurement on an inter-frequency neighboring cell by using an autonomous interval. For another example, when receiving the second indication information and the second indication information allows the terminal equipment to perform L1 measurement on an inter-frequency neighboring cell by using an autonomous interval, the terminal equipment performs L1 measurement on the inter-frequency neighboring cell by using the autonomous interval. For a further example, in a case where the network device does not configure a measurement interval for the terminal equipment, the terminal equipment performs L1 measurement on an inter-frequency neighboring cell by using an autonomous interval, based on the second indication information.

In the above embodiments, the autonomous interval refers to time when a terminal equipment is not scheduled by a network, i.e., the terminal equipment may perform L1 measurement on a frequency of the inter-frequency candidate target cell or on the inter-frequency candidate target cell in time (subframes and/or slots) not scheduled by the network, according to an indication from the first network device. The present disclosure is not limited to this, the autonomous interval may further be time when data transmission is not performed, or time that may be used for inter-frequency measurement, etc.

In some embodiments, the first network device configures a measurement interval for the terminal equipment, the present disclosure does not limit a configuration method, thereby the terminal equipment may also use the measurement interval configured for it by the network device to perform L1 measurement on a frequency of an inter-frequency candidate target cell or on an inter-frequency candidate target cell. Behaviors of the terminal equipment will be described in later embodiments.

For example, if the terminal equipment cannot perform L1 measurement on an inter-frequency neighboring cell by using an autonomous interval, the network device (forces to or always) configure(s) a measurement interval for the terminal equipment.

For another example, if the network device configures a measurement interval for the terminal equipment, the terminal equipment may also use the measurement interval to perform L1 measurement on an inter-frequency neighboring cell. For a further example, if the terminal equipment cannot use an autonomous interval and the network device configures a measurement interval for the terminal equipment, the terminal equipment may also use the measurement interval to perform L1 measurement on an inter-frequency neighboring cell.

In the above examples, that the terminal equipment cannot use the autonomous interval, refers to, for example, the terminal equipment does not have this capability, or the network device does not support, for example the network device does not configure the second indication information, or the configured second indication information indicates that the autonomous interval is not allowed to be used.

In the above embodiments, the measurement interval refers to time (subframe and/or slot) used for inter-frequency measurement and configured by the network device for the terminal equipment, for example the first network device configures a period T and a duration x, and an optional offset, and the terminal equipment performs inter-frequency measurement of an x time length after the offset at each period T (i.e., performs L1 measurement on a frequency of an inter-frequency candidate target cell or on an inter-frequency candidate target cell).

In each of the above embodiments, the terminal equipment does not transmit or receive UL data, DL data, signaling, reference signals, and/or channels with the network device during an autonomous interval or a measurement interval.

In some embodiments, the first network device further receives third indication information transmitted by a second network device, the third indication information indicating whether to trigger the L1 or L2 based inter-cell mobility procedure from the serving cell to the target cell. Here, the first network device is a distributed unit in a communication system, such as a gNB-DU in a NG-RAN deployment scenario or an IAB-donor-DU or an IAB-node-DU in an IAB deployment scenario. The second network device is a central unit in the communication system, such as a gNB-CU in a NG-RAN deployment scenario or an IAB-donor-CU in an IAB deployment scenario, etc.

In the above embodiments, the terminal equipment may transmit to a CU an L3 measurement report that includes a measurement result of a cell and/or a beam of an inter-frequency candidate target cell, and the CU transmits an indication to a DU to indicate whether to perform L1 or L2 based mobility (cell change) from a serving cell to a target cell. Thereby, the DU may decide whether to trigger an L1 or L2 based inter-cell mobility procedure from a serving cell to a target cell, based on the indication from the CU.

In some embodiments, the first network device further configures a candidate target cell or a candidate target cell group for the terminal equipment based on the L3 measurement result from the terminal equipment. The candidate target cell or a candidate target cell in the candidate target cell group and a current serving cell may be of intra-frequency or may be of inter-frequency.

In each of the above embodiments, "inter-frequency" refers to a frequency different from a frequency of a serving cell. Here, the frequency being different includes: center frequency points are different or subcarrier spacings are different, or both center frequency points and subcarrier spacings are different, the present disclosure is not limited to this.

In each of the above embodiments, the L1 measurement result may be an L1 measurement result of a beam and/or a reference signal of an inter-frequency candidate target cell or a cell associated with the inter-frequency candidate target cell. Here, the reference signal may be an SSB and/or a CSI-RS, the present disclosure is not limited to this. Moreover, the cell associated with the inter-frequency candidate target cell may be an intra-frequency candidate target cell or serving cell. That is, said L1 measurement result may further be an L1 measurement result of an intra-frequency candidate target cell associated with the inter-frequency candidate target cell or a serving cell.

In the embodiments of the present disclosure, triggering the L1 or L2 based inter-cell mobility procedure from a serving cell to a target cell may include: transmitting an L1 indication to the terminal equipment via the serving cell and/or transmitting an L2 indication to the terminal equipment via the serving cell.

In the above embodiments, the L1 indication at least includes: target cell information and/or target cell group information. Similarly, the L2 indication also at least includes: target cell information and/or target cell group information. According to the L1 indication and/or L2 indication, the terminal equipment completes movement or handover from the serving cell to the target cell.

Each of the above embodiments is only illustrative for the method in the embodiments of the present disclosure from a network side, but the present disclosure is not limited to this, appropriate modifications may be further made based on the above each embodiment. For example, each of the above embodiments may be used individually, or one or more of the above embodiments may be combined.

According to the method in the embodiments of the present disclosure, it can ensure that an L1 or L2 based inter-cell mobility mechanism is capable of supporting inter-frequency scenarios, so as to ensure that a network provide services to a terminal by using a cell with the best quality, thereby to guarantee quality of service of the terminal and improve network throughput.

### Embodiments of a second aspect

Embodiments of the present disclosure provide a triggering method for an inter-cell mobility procedure, which is described from a terminal equipment side. The contents same as those in the embodiments of the first aspect are not repeated again.

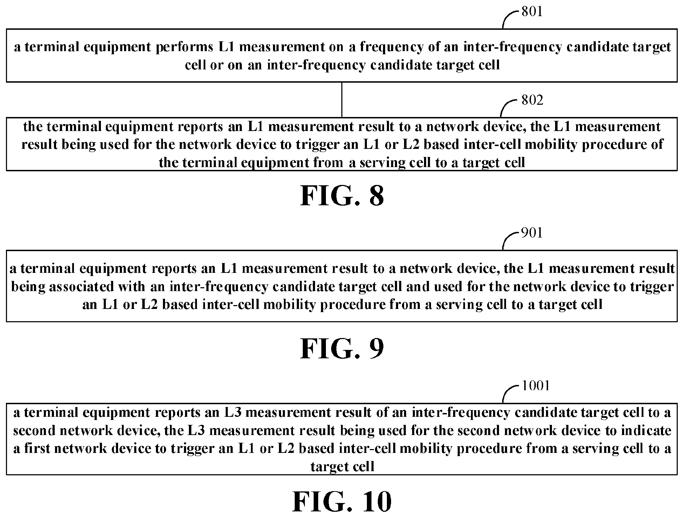

FIG. 8 is a schematic diagram of a triggering method for an inter-cell mobility procedure in the embodiments of the present disclosure. As shown in FIG. 8, the method includes:
801, a terminal equipment performs L1 measurement on a frequency of an inter-frequency candidate target cell or on an inter-frequency candidate target cell; and
802, the terminal equipment reports an L1 measurement result to a network device, the L1 measurement result being used for the network device to trigger an L1 or L2 based inter-cell mobility procedure of the terminal equipment from a serving cell to a target cell.

It should be noted that the above FIG. 8 only schematically describes the embodiments of the present disclosure, but the present disclosure is not limited to this. For example, an execution order of each operation may be adjusted appropriately, moreover other some operations may be increased or operations therein may be reduced. Persons skilled in the art may make appropriate modifications according to the above contents, not limited to the records in the above FIG. 8.

In the above embodiments, the terminal equipment performs L1 measurement on a frequency of an inter-frequency candidate target cell or on an inter-frequency candidate target cell, and reports a measurement result to a network device, thereby the network device, based on the measurement result, triggers an L1 or L2 based inter-cell mobility procedure from a serving cell to a target cell, thereby it can ensure that an L1 or L2 based inter-cell mobility mechanism can support inter-frequency scenarios, so as to ensure that a network provides services to a terminal by using a cell with best quality, thus guaranteeing service quality of the terminal and improving network throughput.

In the embodiments of the present disclosure, "inter-frequency" refers to a frequency different from a frequency of a current serving cell. Here, the frequency being different may be that center frequency points are different or may be that subcarrier spacings are different, or both center frequency points and subcarrier spacings are different.

In the above embodiments, the serving cell may be a special cell (SPCell, including PCell, PSCell, etc.), or may be a secondary cell (SCell), the special cell and the secondary cell may be in the same cell group, or may be in the same or different cell groups.

In some embodiments, that the terminal equipment performs said L1 measurement, may be that the terminal equipment performs said L1 measurement by using an autonomous interval according to an indication from a network device.

For example, the terminal equipment receives indication information (called second indication information) transmitted by the network device, the second indication information indicating the terminal equipment to perform L1 measurement according to the autonomous interval, the terminal equipment may perform said L1 measurement by using the autonomous interval according to an indication of the second indication information.

The autonomous interval refers to time (subframe and/or slot) that is not scheduled by a network, performing L1 measurement by using the autonomous interval, that is, performing L1 measurement in the time that is not scheduled by the network. The present disclosure is not limited to this, the autonomous interval may further be time when data transmission is not performed, or time that may be used for inter-frequency measurement, etc.

In some other embodiments, that the terminal equipment performs said L1 measurement, may be that the terminal equipment performs said L1 measurement by using a measurement interval configured by the network device.

For example, the network device configures the measurement interval for the terminal equipment, and the terminal equipment performs said L1 measurement by using the measurement interval.

The measurement interval refers to time (subframe and/or slot) used for inter-frequency measurement and configured by the network device for the terminal equipment, for example the network device configures a period T and a duration x, and an optional offset, and the terminal equipment performs inter-frequency measurement of an x time length after the offset at each period T (i.e., performs L1 measurement on a frequency of an inter-frequency candidate target cell or on an inter-frequency candidate target cell).

In some embodiments, that the terminal equipment reports the L1 measurement result to the network device, may be that the terminal equipment reports the L1 measurement result to the network device in a case that a first condition is satisfied. Here, the first condition includes but is not limited to at least one of the following: a candidate target cell is better than a serving cell by an offset; a beam of the candidate target cell is better than a beam of the serving cell by an offset; the serving cell is poor; the beam of the serving cell is poor.

That is, if (the beam of) the candidate target cell is better than (the beam of) the serving cell (by an offset), or, (the beam of) the serving cell is poor, the terminal equipment starts (periodic) reporting.

In the above embodiments, "good" and "poor" may be determined based on a measurement result. For example, if a measurement result of (the beam of) the candidate target cell is better than a measurement result of (the beam of) the serving cell (by an offset), the terminal equipment performs said reporting. For another example, if a measurement result of (the beam of) the serving cell is lower than a preset threshold, the terminal equipment performs said reporting, and so on.

In the above embodiments, when the terminal equipment receives a handover command, or when said first condition is unsatisfied, or when the number of times of reporting the L1 measurement result by the terminal equipment reaches a preset maximum, the terminal equipment stops reporting.

The above handover command e.g. is L1 signaling, L2 signaling, RRC signaling, etc., the present disclosure is not limited to this.

In some embodiments, that the terminal equipment reports the L1 measurement result to the network device, may be that the terminal equipment reports a L1 measurement result of a candidate target cell that meets a condition, that is, the terminal equipment performs reporting per candidate target cell. Or, the terminal equipment reports a L1 measurement result of a candidate target cell meeting a condition and a candidate target cell in a cell group where the candidate target cell meeting a condition is located, that is, the terminal equipment performs reporting per candidate target cell group.

In the above embodiments, the L1 measurement result of the candidate target cell may be an L1 measurement result of a beam and/or reference signal of the candidate target cell. Here, the reference signal may be an SSB and/or a CSI-RS, the present disclosure is not limited to this.

In some embodiments, the terminal equipment may perform said L1 measurement according to an indication from a network device.

For example, the terminal equipment receives first indication information transmitted by the network device, and according to the first indication information, starts performing L1 measurement on a frequency of an inter-frequency candidate target cell or on an inter-frequency candidate target cell.

In some embodiments, the terminal equipment may decide whether to perform said L1 measurement according to a measurement result of a serving cell.

For example, the terminal equipment compares the measurement result of the serving cell with a pre-configured threshold (called a first threshold). When the measurement result of the serving cell is poorer than the first threshold, the terminal equipment performs L1 measurement on a frequency of an inter-frequency candidate target cell or on an inter-frequency candidate target cell.

For another example, the terminal equipment compares the measurement result of the serving cell with a pre-configured threshold (called a second threshold). When the measurement result of the serving cell is better than the second threshold, the terminal equipment stops performing or does not perform L1 measurement on a frequency of an inter-frequency candidate target cell or on an inter-frequency candidate target cell.

In the above examples, the measurement result of the serving cell may be a measurement result of a beam and/or reference signal of the serving cell. Here, the reference signal may be an SSB and/or a CSI-RS, the present disclosure is not limited to this.

Each of the above embodiments is only illustrative for the method in the embodiments of the present disclosure from a terminal equipment side, but the present disclosure is not limited to this, appropriate modifications may be further made based on the above each embodiment. For example, each of the above embodiments may be used individually, or one or more of the above embodiments may be combined.

According to the method in the embodiments of the present disclosure, the terminal equipment is capable of performing measurement on a frequency of an inter-frequency candidate target cell or on an inter-frequency candidate target cell, and reporting a measurement result to a network, in this way, the network is capable of performing L1/L2 based inter-frequency cell changes based on the reported measurement result. Thereby, it can ensure that an L1 or L2 based inter-cell mobility mechanism is capable of supporting inter-frequency scenarios, so as to ensure that a network provide services to a terminal by using a cell with the best quality, thereby to guarantee quality of service of the terminal and improve network throughput.

### Embodiments of a third aspect

Embodiments of the present disclosure provide a triggering method for an inter-cell mobility procedure, which is described from a terminal equipment side. The contents same as those in the embodiments of the first aspect are not repeated again.

FIG. 9 is a schematic diagram of a triggering method for an inter-cell mobility procedure in the embodiments of the present disclosure. As shown in FIG. 9, the method includes:
901, a terminal equipment reports an L1 measurement result to a network device, the L1 measurement result being associated with an inter-frequency candidate target cell and used for the network device to trigger an L1 or L2 based inter-cell mobility procedure from a serving cell to a target cell.

It should be noted that the above FIG. 9 only schematically describes the embodiments of the present disclosure, but the present disclosure is not limited to this. For example, other some operations can be increased or operations therein may be reduced. Persons skilled in the art may make appropriate modifications according to the above contents, not limited to the records in the above FIG. 9.

In the above embodiments, the terminal equipment reports the L1 measurement result associated with the inter-frequency candidate target cell to a network side, thereby the network device triggers an L1 or L2 based inter-cell mobility procedure from a serving cell to a target cell based on the L1 measurement result associated with the inter-frequency candidate target cell, thereby it can ensure that an L1 or L2 based inter-cell mobility mechanism can support inter-frequency scenarios, so as to ensure that a network provides services to a terminal by using a cell with best quality, thus guaranteeing service quality of the terminal and improving network throughput.

In the embodiments of the present disclosure, the L1 measurement result is an L1 measurement result of a cell associated with the inter-frequency candidate target cell.

In some embodiments, if the network device configures a candidate target cell for the terminal equipment and the candidate target cell is an inter-frequency cell, the cell associated with the inter-frequency candidate target cell may be an intra-frequency cell associated with the inter-frequency cell.

For example, the network device configures a set of *SpCellConfig* IEs and a set of *SCellConfig* IEs for the terminal equipment, and a configuration of each candidate target cell is included in one of the above *SpCellConfig* IEs or one of the above *SCellConfig* IEs, then if the candidate target cell is an inter-frequency cell, the inter-frequency candidate target cell is associated with an intra-frequency candidate target cell. For example, *SpCellConfig* IEs or *SCellConfig* IEs of this inter-frequency cell include a piece of cell information (index or cell ID), the cell being an intra-frequency candidate target cell. The above are just examples for description, the cell associated with the inter-frequency candidate target cell may further be a serving cell. In such a case, *SpCellConfig* IEs or *SCellConfig* IEs of this inter-frequency cell include information of the serving cell (a serving cell index or a cell ID of this cell).

In some other embodiments, if the network device configures a candidate target cell group for the terminal equipment and the candidate target cell group includes an inter-frequency cell, the cell associated with the inter-frequency candidate target cell is an intra-frequency cell in the candidate target cell group or an intra-frequency cell in a cell group other than the candidate target cell group.

For example, the network device configures a set of *CellGroupConfig* IEs or a set of RRCReconfiguration messages including *CellGroupConfig* IEs for the terminal equipment, and a configuration of each candidate target cell is included in one of the *CellGroupConfig* IEs or one of the RRCReconfiguration messages, then if the candidate target cell is an inter-frequency cell, the inter-frequency candidate target cell is associated with an intra-frequency candidate target cell. For example, *SpCellConfig* IEs or *SCellConfig* IEs of this inter-frequency cell include a piece of cell information (index or cell ID), if there exists an intra-frequency candidate target cell in the same cell group, the cell associated with the candidate target cell is an intra-frequency candidate target cell in the same cell group; otherwise, the cell associated with the candidate target cell is an intra-frequency candidate target cell in different cell groups. The above are just examples for description, the cell associated with the inter-frequency candidate target cell may further be a serving cell. In such a case, *SpCellConfig* IEs or *SCellConfig* IEs of this inter-frequency cell include information of the serving cell (a serving cell index or a cell ID of this cell).

FIG. 10 is another schematic diagram of a triggering method for an inter-cell mobility procedure in the embodiments of the present disclosure. As shown in FIG. 10, the method includes:
1001, a terminal equipment reports an L3 measurement result of an inter-frequency candidate target cell to a second network device, the L3 measurement result being used for the second network device to indicate a first network device to trigger an L1 or L2 based inter-cell mobility procedure from a serving cell to a target cell.

In some embodiments, when the L1 measurement result associated with said inter-frequency candidate target cell is reported, the terminal equipment transmits an L3 measurement result of the inter-frequency candidate target cell to a second network device, and the second network device, based on the L3 measurement result, indicates the first network device to trigger an L1 or L2 based mobility procedure from a serving cell to a target cell.

In some other embodiments, when the L1 measurement result associated with said inter-frequency candidate target cell satisfies a second condition, the terminal equipment transmits an L3 measurement result of the inter-frequency candidate target cell to a second network device, and the second network device, based on the L3 measurement result, indicates the first network device to trigger an L1 or L2 based mobility procedure from a serving cell to a target cell.

In the above embodiments, the second condition includes but is not limited to at least one of the following: an L1 measurement result of a cell associated with a candidate target cell is better than that of a serving cell by an offset; an L1 measurement result of a beam of a cell associated with a candidate target cell is better than that of a beam of a serving cell by an offset; an L1 measurement result of a serving cell is poor; an L1 measurement result of a beam of a serving cell is poor.

In the above embodiments, "good" and "poor" may be determined based on a measurement result. For example, if a measurement result of the candidate target cell (or its beam/reference signal) is better than a measurement result of the serving cell (or its beam/reference signal) (by an offset), the terminal equipment performs said reporting. For another example, if a measurement result of the serving cell (or its beam/reference signal) is lower than a preset threshold, the terminal equipment performs said reporting, and so on.

In some further embodiments, when a beam or reference signal based L3 measurement result of said inter-frequency candidate target cell satisfies a third condition, the terminal equipment transmits the L3 measurement result of the inter-frequency candidate target cell to a second network device, and the second network device, based on the L3 measurement result, indicates the first network device to trigger an L1 or L2 based mobility procedure from a serving cell to a target cell.

In the above embodiments, the third condition may be that the L3 measurement result of a beam and/or reference signal of the candidate target cell is better than an L3 measurement result of a beam and/or reference signal of a special cell or secondary cell by an offset. Here, the L3 measurement result of the beam and/or reference signal of the special cell or secondary cell may be an L3 measurement result of the best beam or reference signal of the special cell or secondary cell, the present disclosure is not limited to this. Or, the third condition may be that the L3 measurement result of the beam and/or reference signal of the candidate target cell is better than a pre-configured threshold (called a third threshold). Here, optionally, at the same time, the L3 measurement result of the beam and/or reference signal of the special cell is poorer than a pre-set threshold (called a fourth threshold). Here, the L3 measurement result of the beam and/or reference signal of the special cell may be an L3 measurement result of the best beam or reference signal of the special cell, the present disclosure is not limited to this.

In the above embodiments, "the L1 measurement result associated with the inter-frequency candidate target cell is reported", "the L1 measurement result associated with the inter-frequency candidate target cell satisfies a second condition" and "a L3 measurement result of a beam or reference signal of the inter-frequency candidate target cell satisfies a third condition" are taken as a trigger condition for reporting the L3 measurement result, the present disclosure is not limited to this. Other trigger conditions may further be applied to L3 measurement result reporting, as long as measurement reporting may be triggered faster than existing trigger conditions for measurement reporting, reducing a latency for measurement reporting.

In the above embodiments, when the terminal equipment receives a handover command, or when the second condition is unsatisfied, or when the third condition is unsatisfied, or when the number of times of reporting the L3 measurement result by the terminal equipment reaches a preset maximum, the terminal equipment stops reporting.

The above handover command e.g. is L1 signaling, L2 signaling, RRC signaling, etc., the present disclosure is not limited to this.

In each of the foregoing embodiments, the first network device is a distributed unit in a communication system, such as a gNB-DU in a NG-RAN deployment scenario or an IAB-donor-DU or an IAB-node-DU in an IAB deployment scenario. The second network device is a central unit in the communication system, such as a gNB-CU in a NG-RAN deployment scenario or an IAB-donor-CU in an IAB deployment scenario, etc.

For example, when the L1 measurement result associated with the candidate target cell is reported, and/or, the L1 measurement result associated with the candidate target cell satisfies a specific condition (the second condition), and/or, the L3 measurement result of the candidate target cell satisfies a specific condition (the third condition), the terminal equipment transmits to the second network device a measurement report (L3 measurement report) including the measurement result of the candidate target cell (cell and/or beam), then the second network device transmits to the first network device an indication indicating whether to perform an L1 or L2 based mobility or cell change from a serving cell to a target cell.

Each of the above embodiments is only illustrative for the method in the embodiments of the present disclosure from a terminal equipment side, but the present disclosure is not limited to this, appropriate modifications may be further made based on the above each embodiment. For example, each of the above embodiments may be used individually, or one or more of the above embodiments may be combined.

According to the method in the embodiments of the present disclosure, the terminal equipment reports an L1 measurement result associated with a candidate target cell to a first network device, or, the terminal equipment reports an L3 measurement result associated with a candidate target cell to a second network device, thereby the first network device is capable of triggering an L1 or L2 based inter-cell mobility procedure from a serving cell to a target cell based on the L3 measurement and a measurement report or based on the L1 measurement result associated with the candidate target cell. Thereby, it can ensure that an L1 or L2 based inter-cell mobility mechanism is capable of supporting inter-frequency scenarios, so as to ensure that a network provide services to a terminal by using a cell with the best quality, thereby to guarantee quality of service of the terminal and improve network throughput.

### Embodiments of a fourth aspect

Embodiments of the present disclosure provide a triggering apparatus for an inter-cell mobility procedure. The apparatus may, for example, be a network device, or may be one or more parts or components configured in the network device. The apparatus in the embodiments of the present disclosure corresponds to the method in the embodiments of the first aspect, the contents same as those in the embodiments of the first aspect are not repeated.

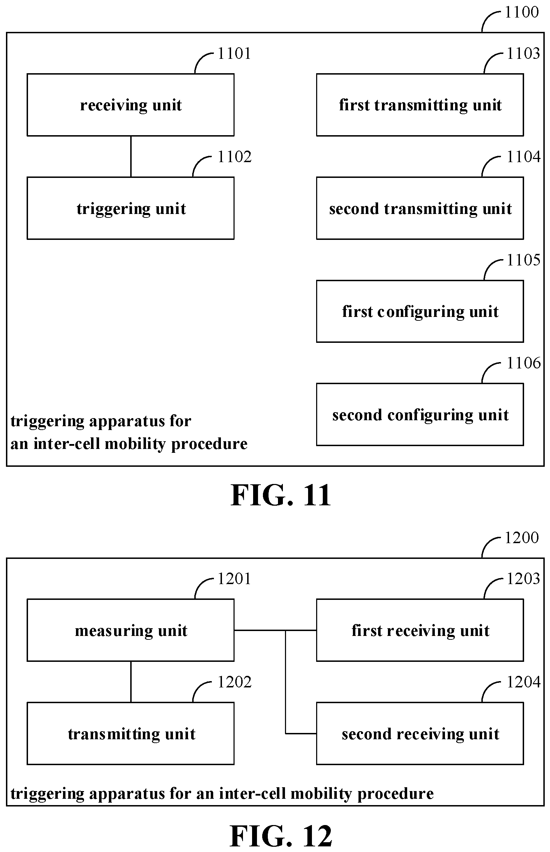

FIG. 11 is a schematic diagram of a triggering apparatus for an inter-cell mobility procedure in the embodiments of the present disclosure. As shown in FIG. 11, the triggering apparatus 1100 for an inter-cell mobility procedure in the embodiments of the present disclosure includes:
a receiving unit 1101 configured to receive measurement-related information, the measurement-related information including one of the following: an L1 measurement result by performing L1 measurement on a frequency of an inter-frequency candidate target cell or on an inter-frequency candidate target cell by a terminal equipment, an indication from a second network device based on an L3 measurement result by performing L3 measurement on a frequency of an inter-frequency candidate target cell or on an inter-frequency candidate target cell by the terminal equipment, or an L1 measurement result associated with a candidate target cell; and
a triggering unit 1102 configured to, based on the measurement-related information, trigger an L1 or L2 based inter-cell mobility procedure from a serving cell to a target cell.

In some embodiments, as shown in FIG. 11, the apparatus 1100 further includes:
a first transmitting unit 1103 configured to transmit first indication information to the terminal equipment, the first indication information indicating the terminal equipment to perform L1 measurement on the frequency of the inter-frequency candidate target cell or on the inter-frequency candidate target cell.

In some embodiments, as shown in FIG. 11, the apparatus 1100 further includes:
a second transmitting unit 1104 configured to transmit second indication information to the terminal equipment, the second indication information indicating the terminal equipment to perform L1 measurement by using an autonomous interval.

The autonomous interval e.g. is time when the terminal equipment is not scheduled by a network.

In some embodiments, as shown in FIG. 11, the apparatus 1100 further includes:
a first configuring unit 1105 configured to configure a measurement interval for the terminal equipment, the measurement interval being used by the terminal equipment to perform the L1 measurement.

In some embodiments, the receiving unit 1101 further receives third indication information transmitted by a second network device, the third indication information indicating whether to trigger the L1 or L2 based inter-cell mobility procedure from the serving cell to the target cell. In the above embodiments, the first network device is a distributed unit (DU) in a communication system, and the second network device is a central unit (CU) in the communication system.

In some embodiments, as shown in FIG. 11, the apparatus 1100 further includes:
a second configuring unit 1106 configured to configure a candidate target cell or a candidate target cell group for the terminal equipment based on the L3 measurement result from the terminal equipment, the candidate target cell or a candidate target cell in the candidate target cell group and the service cell being of intra-frequency or inter-frequency.

In some embodiments, the triggering unit 1102 transmits an L1 indication to the terminal equipment via a serving cell; and/or transmits an L2 indication to the terminal equipment via a serving cell, so as to trigger L1 or L2 based inter-cell mobility from the serving cell to a target cell.

In the above embodiments, the L1 indication at least includes: information of a target cell and/or information of a target cell group.

In the above embodiments, the L2 indication at least includes: information of a target cell and/or information of a target cell group.

In each of the above embodiments, "inter-frequency" refers to a frequency different from a frequency of a serving cell, the frequency being different refers to: center frequency points are different or subcarriers spacings are different.

In each of the above embodiments, the L1 measurement result may be an L1 measurement result of a beam and/or a reference signal of a candidate target cell or a cell associated with the candidate target cell. Here, the reference signal may be an SSB and/or a CSI-RS.

Embodiments of the present disclosure further provide a triggering apparatus for an inter-cell mobility procedure. The apparatus may, for example, be a terminal equipment, or may be one or more parts or components configured in the terminal equipment. The apparatus in the embodiments of the present disclosure corresponds to the method in the embodiments of the second aspect, the contents same as those in the embodiments of the second aspect are not repeated.

FIG. 12 is a schematic diagram of a triggering apparatus for an inter-cell mobility procedure in the embodiments of the present disclosure. As shown in FIG. 12, the triggering apparatus 1200 for an inter-cell mobility procedure in the embodiments of the present disclosure includes:
a measuring unit 1201 configured to perform L1 measurement on a frequency of an inter-frequency candidate target cell or on an inter-frequency candidate target cell; and
a transmitting unit 1202 configured to report an L1 measurement result to a network device, the L1 measurement result being used for the network device to trigger an L1 or L2 based inter-cell mobility procedure of the terminal equipment from a serving cell to a target cell.

In the above embodiments, "inter-frequency" refers to a frequency different from a frequency of a serving cell, the frequency being different includes: center frequency points are different or subcarrier spacings are different.

In some embodiments, the serving cell includes a special cell and a secondary cell, the special cell and the secondary cell are in the same cell group, or in the same or different cell groups.

In some embodiments, as shown in FIG. 12, the apparatus 1200 further includes:
a first receiving unit 1203 configured to receive second indication information transmitted by the network device, the second indication information indicating the terminal equipment to perform L1 measurement according to an autonomous interval; the measuring unit 1201 performs the L1 measurement by using the autonomous interval.

In the above embodiments, the autonomous interval may be time when the terminal equipment is not scheduled by a network.

In some embodiments, the measuring unit 1201 performs the L1 measurement by using a measurement interval configured by the network device.

In some embodiments, when a first condition is satisfied, the transmitting unit 1202 reports the L1 measurement result to the network device; the first condition includes one of the following: a candidate target cell is better than a serving cell by an offset; a beam of the candidate target cell is better than a beam of the serving cell by an offset; the serving cell is poor; the beam of the serving cell is poor.

In some embodiments, when the terminal equipment receives a handover command, or when the first condition is unsatisfied, or when the number of times of reporting the L1 measurement result by the terminal equipment reaches a preset maximum, the transmitting unit 1202 stops reporting the L1 measurement result.

In some embodiments, the transmitting unit 1202 reports an L1 measurement result of a candidate target cell that satisfies a condition; or, the transmitting unit 1202 reports an L1 measurement result of a candidate target cell that satisfies a condition and of a candidate target cell in a cell group where the candidate target cell that satisfies a condition is located.

In the above embodiments, the L1 measurement result of the candidate target cell is an L1 measurement result of a beam and/or reference signal of the candidate target cell. The reference signal e.g. is an SSB and/or a CSI-RS.

In some embodiments, as shown in FIG. 12, the apparatus 1200 further includes:
a second receiving unit 1204 configured to receive first indication information transmitted by a network device; and
a measuring unit 1201 configured to perform L1 measurement on a frequency of an inter-frequency candidate target cell or on an inter-frequency candidate target cell, according to the first indication information.

In some embodiments, the measuring unit 1201 compares the measurement result of the serving cell with a pre-configured first threshold. When the measurement result of the serving cell is poorer than the first threshold, the measuring unit 1201 performs L1 measurement on a frequency of an inter-frequency candidate target cell or on an inter-frequency candidate target cell.

In the above embodiments, the measurement result of the serving cell may be a measurement result of a beam and/or reference signal of the serving cell. The reference signal e.g. is an SSB and/or a CSI-RS.

Embodiments of the present disclosure further provide a triggering apparatus for an inter-cell mobility procedure. The apparatus may, for example, be a terminal equipment, or may be one or more parts or components configured in the terminal equipment. The apparatus in the embodiments of the present disclosure corresponds to the method as shown in FIG. 9 in the embodiments of the third aspect, the contents same as those in the embodiments of the third aspect are not repeated.

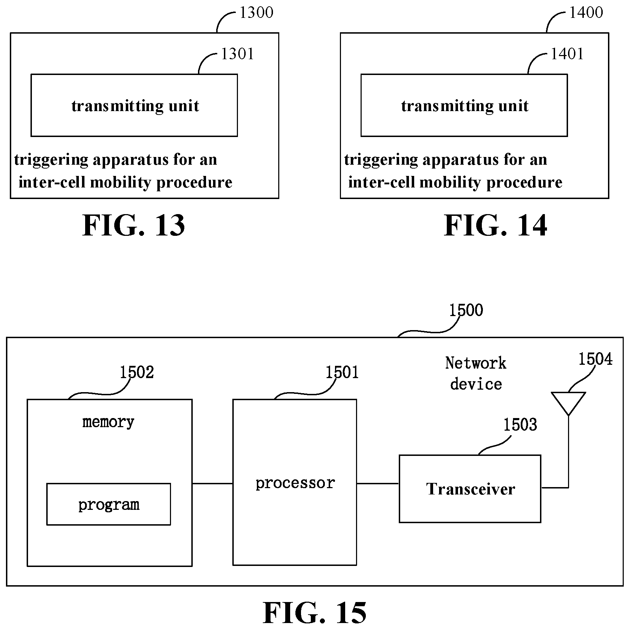

FIG. 13 is a schematic diagram of a triggering apparatus for an inter-cell mobility procedure in the embodiments of the present disclosure. As shown in FIG. 13, the triggering apparatus 1300 for an inter-cell mobility procedure in the embodiments of the present disclosure includes:
a transmitting unit 1301 configured to report an L1 measurement result to a network device, the L1 measurement result being associated with an inter-frequency candidate target cell and used for the network device to trigger an L1 or L2 based inter-cell mobility procedure from a serving cell to a target cell.

In the above embodiment, the L1 measurement result is an L1 measurement result of a cell associated with the inter-frequency candidate target cell.

In some embodiments, if the first network device configures a candidate target cell for the terminal equipment and the candidate target cell is an inter-frequency cell, the cell associated with the inter-frequency candidate target cell is an intra-frequency cell associated with the inter-frequency cell.

In some embodiments, if the first network device configures a candidate target cell group for the terminal equipment and the candidate target cell group includes an inter-frequency cell, the cell associated with the inter-frequency candidate target cell is an intra-frequency cell in the candidate target cell group or an intra-frequency cell in a cell group other than the candidate target cell group.

Embodiments of the present disclosure further provide a triggering apparatus for an inter-cell mobility procedure. The apparatus may, for example, be a terminal equipment, or may be one or more parts or components configured in the terminal equipment. The apparatus in the embodiments of the present disclosure corresponds to the method as shown in FIG. 10 in the embodiments of the third aspect, the contents same as those in the embodiments of the third aspect are not repeated.

FIG. 14 is a schematic diagram of a triggering apparatus for an inter-cell mobility procedure in the embodiments of the present disclosure. As shown in FIG. 14, the triggering apparatus 1400 for an inter-cell mobility procedure in the embodiments of the present disclosure includes:
a transmitting unit 1401 configured to report an L3 measurement result of an inter-frequency candidate target cell to a second network device, the L3 measurement result being used for the second network device to indicate a first network device to trigger an L1 or L2 based inter-cell mobility procedure from a serving cell to a target cell, the second network device being a central unit (CU) in a communication system.

In some embodiments, when the L1 measurement result associated with the inter-frequency candidate target cell is reported or satisfies a second condition, or when the L3 measurement result of the inter-frequency candidate target cell satisfies a third condition, the transmitting unit 1401 transmits the L3 measurement result to the second network device, the L3 measurement result is used by the second network device to indicate the first network device to trigger L1 or L2 based mobility procedure from a serving cell to the candidate target cell, the first network device is a distributed unit (DU) in a communication system, and the second network device is a central unit (CU) in the communication system.

In the above embodiments, the second condition may include at least one of the following: an L1 measurement result of a cell associated with an inter-frequency candidate target cell is better than that of a serving cell by an offset; an L1 measurement result of a beam of a cell associated with an inter-frequency candidate target cell is better than that of a beam of a serving cell by an offset; an L1 measurement result of a serving cell is poor; an L1 measurement result of a beam of a serving cell is poor.

In the above embodiments, the third condition may include at least one of the following: an L3 measurement result of a beam and/or reference signal of an inter-frequency candidate target cell is better than that of a special cell and/or secondary cell by an offset; and/or, an L3 measurement result of a beam and/or reference signal of an inter-frequency candidate target cell is better than a third threshold, and an L3 measurement result of a beam and/or reference signal of the special cell is worse than a fourth threshold.

In the above embodiments, in some implementations, when the terminal equipment receives a handover command, or when the second condition is unsatisfied, or when the third condition is unsatisfied, or when the number of times of reporting the L3 measurement result by the terminal equipment reaches a preset maximum, the transmitting unit 1401 stops reporting the L3 measurement result.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The triggering apparatuses 1100 to 1400 for an inter-cell mobility procedure may further include other components or modules. For detailed contents of these components or modules, relevant technologies can be referred to. Moreover, the above components or modules may be realized by a hardware facility such as a processor, a memory, a transmitter, a receiver, etc. The embodiments of the present disclosure have no limitation to this.

According to the apparatus in the embodiments of the present disclosure, it can ensure that an L1 or L2 based inter-cell mobility mechanism is capable of supporting inter-frequency scenarios, so as to ensure that a network provide services to a terminal by using a cell with the best quality, thereby to guarantee quality of service of the terminal and improve network throughput.

### Embodiments of a fifth aspect

Embodiments of the present disclosure further provide a communication system, including a network device and a terminal equipment.

In some embodiments, the network device includes the apparatus 1100 described in the embodiments of the fourth aspect, and is configured to perform the method described in the embodiments of the first aspect. Since the method has been described in details in the embodiments of the first aspect, its contents are incorporated here and are not repeated.

In some embodiments, the terminal equipment includes the apparatus 1200 or 1300 or 1400 described in the embodiments of the fourth aspect, and is configured to perform the method described in the embodiments of the second or third aspect. Since the method has been described in details in the embodiments of the second and third aspects, its contents are incorporated here and are not repeated.

Embodiments of the present disclosure further provide a network device, the network device for example may be a base station, but the present disclosure is not limited to this, it may also be other network device.

FIG. 15 is a composition schematic diagram of a network device in the embodiments of the present disclosure. As shown in FIG. 15, the network device 1500 may include: a processor 1501 and a memory 1502; the memory 1502 is coupled to the processor 1501. The memory 1502 may store various data; moreover, also stores a program for information processing, and executes the program under the control of the processor 1501.

In some embodiments, functions of the apparatus 1100 in the embodiments of the fourth aspect may be integrated into the processor 1501, wherein the processor 1501 may be configured to execute a program to implement the method as described in the embodiments of the first aspect, the contents of which are incorporated herein and are not described repeatedly here.

In some other embodiments, the apparatus 1100 in the embodiments of the fourth aspect may be configured separately from the processor 1501, for example the device in the embodiments of the fourth aspect may be configured as a chip connected to the processor 1501, functions of the apparatus 1100 in the embodiments of the fourth aspect are realized through the control of the processor 1501.

In addition, as shown in FIG. 15, the network device 1500 may further include: transceivers 1503 and 1504. The functions of said components are similar to related arts, which are not repeated here. It's worth noting that the network device 1500 does not have to include all the components shown in FIG. 15. Moreover, the network device 1500 may also include components not shown in FIG. 15, relevant arts can be referred to.

Embodiments of the present disclosure further provide a terminal equipment, the terminal equipment for example may be a UE, but the present disclosure is not limited to this, it may also be other terminal equipment.

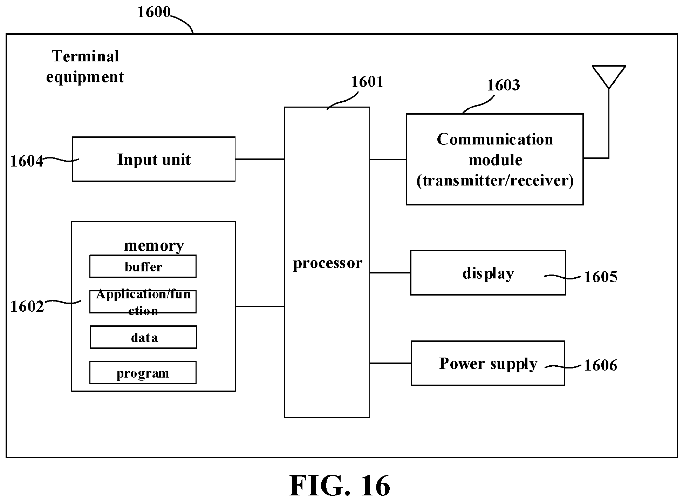

FIG. 16 is a schematic diagram of a terminal equipment in the embodiments of the present disclosure. As shown in FIG. 16, the terminal equipment 1600 may include a processor 1601 and a memory 1602; the memory 1602 stores data and programs, and is coupled to the processor 1601. It's worth noting that this figure is exemplary; other types of structures may also be used to supplement or replace this structure, so as to realize a telecommunication function or other functions.

In some embodiments, functions of the apparatus 1200 or 1300 or 1400 in the embodiments of the fourth aspect may be integrated into the processor 1601, wherein the processor 1601 may be configured to execute a program to implement the method as described in the embodiments of the second or third aspect, the contents of which are incorporated herein and are not described repeatedly here.

In some other embodiments, the apparatus 1200 or 1300 or 1400 in the embodiments of the fourth aspect may be configured separately from the processor 1601, for example the apparatus 1200 or 1300 or 1400 in the embodiments of the fourth aspect may be configured as a chip connected to the processor 1601, functions of the apparatus 1200 or 1300 or 1400 in the embodiments of the fourth aspect are realized through the control of the processor 1601.

As shown in FIG. 16, the terminal equipment 1600 may further include: a communication module 1603, an input unit 1604, a display 1605 and a power supply 1606. The functions of said components are similar to related arts, which are not repeated here. It's worth noting that the terminal equipment 1600 does not have to include all the components shown in FIG. 16, said components are not indispensable. Moreover, the terminal equipment 1600 may also include components not shown in FIG. 16, relevant technologies can be referred to.

Embodiments of the present disclosure further provide a computer program, wherein when a network device executes the program, the program enables the network device to execute the method described in the embodiments of the first aspect.

Embodiments of the present disclosure further provide a storage medium in which a computer program is stored, wherein the computer program enables a network device to execute the method described in the embodiments of the first aspect.

Embodiments of the present disclosure further provide a computer program, wherein when a terminal equipment executes the program, the program enables the terminal equipment to execute the method described in the embodiments of the second aspect or the third aspect.

Embodiments of the present disclosure further provide a storage medium in which a computer program is stored, wherein the computer program enables a terminal equipment to execute the method described in the embodiments of the second aspect or the third aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
1. A triggering method for an inter-cell mobility procedure, comprising:
   a first network device receives measurement-related information, the measurement-related information including one of the following: an L1 measurement result by performing L1 measurement on a frequency of an inter-frequency candidate target cell or on an inter-frequency candidate target cell by a terminal equipment, an indication from a second network device based on an L3 measurement result by performing L3 measurement on a frequency of an inter-frequency candidate target cell or on an inter-frequency candidate target cell by the terminal equipment, or an L1 measurement result associated with a candidate target cell; and
   the first network device, based on the measurement-related information, triggers an L1 or L2 based inter-cell mobility procedure from a serving cell to a target cell.
2. The method according to Supplement 1, wherein the method further comprises:
   the first network device transmits first indication information to the terminal equipment, the first indication information indicating the terminal equipment to perform L1 measurement on the frequency of the inter-frequency candidate target cell or on the inter-frequency candidate target cell.
3. The method according to Supplement 1 or 2, wherein the method further comprises:
   the first network device transmits second indication information to the terminal equipment, the second indication information indicating the terminal equipment to perform L1 measurement by using an autonomous interval.
4. The method according to Supplement 3, wherein
   the autonomous interval refers to a time when the terminal equipment is not scheduled by a network.
5. The method according to Supplement 1 or 2, wherein the method further comprises:
   the first network device configures a measurement interval for the terminal equipment, the measurement interval being used by the terminal equipment to perform the L1 measurement.
6. The method according to Supplement 1, wherein the method further comprises:
   the first network device receives third indication information transmitted by the second network device, the third indication information indicating whether to trigger the L1 or L2 based inter-cell mobility procedure from the serving cell to the target cell, and
   the second network device is a central unit (CU) in a communication system.
6a. The method according to any one of Supplements 1-6, wherein the first network device is a distributed unit (DU) in a communication system.
7. The method according to any one of the preceding Supplements, wherein the method further comprises:
   the first network device configures a candidate target cell or a candidate target cell group for the terminal equipment based on the L3 measurement result from the terminal equipment, and
   the candidate target cell or a candidate target cell in the candidate target cell group and the service cell is of intra-frequency or inter-frequency.
8. The method according to Supplement 1, wherein that triggering the L1 or L2 based inter-cell mobility procedure from the serving cell to the target cell comprises:
   transmitting an L1 indication to the terminal equipment via the serving cell; and/or
   transmitting an L2 indication to the terminal equipment via the serving cell.
9. The method according to Supplement 8, wherein the L1 indication includes at least one of the following:
   information on a target cell; and
   information on a target cell group.
10. The method according to Supplement 8, wherein the L2 indication includes at least one of the following:
   information on a target cell; and
   information on a target cell group.
11. The method according to Supplement 1, wherein
   the inter-frequency refers to a frequency that is different from a frequency of the serving cell;
   the frequency being different including that center frequency points are different or subcarrier spacings are different.
12. The method according to Supplement 1, wherein
   the L1 measurement result is an L1 measurement result of a beam and/or a reference signal of a candidate target cell or a cell associated with the candidate target cell.
13. The method according to Supplement 12, wherein
   the reference signal is an SSB and/or a CSI-RS.
14. A triggering method for an inter-cell mobility procedure, comprising:
   a terminal equipment performs L1 measurement on a frequency of an inter-frequency candidate target cell or on an inter-frequency candidate target cell; and
   the terminal equipment reports an L1 measurement result to a network device, the L1 measurement result being used for the network device to trigger an L1 or L2 based inter-cell mobility procedure of the terminal equipment from a serving cell to a target cell.
15. The method according to Supplement 14, wherein
   the serving cell includes a special cell and a secondary cell, the special cell and the secondary cell are in the same cell group, or in the same or different cell groups.
16. The method according to Supplement 14, wherein
   the inter-frequency refers to a frequency that is different from a frequency of the serving cell;
   the frequency being different including that center frequency points are different or subcarrier spacings are different.
17. The method according to Supplement 14, wherein that the terminal equipment performs the L1 measurement comprises:
   the terminal equipment receives second indication information transmitted by the network device, the second indication information indicating the terminal equipment to perform L1 measurement according to an autonomous interval; and
   the terminal equipment performs the L1 measurement by using the autonomous interval.
18. The method according to Supplement 17, wherein
   the autonomous interval refers to a time when the terminal equipment is not scheduled by a network.
19. The method according to Supplement 14, wherein that the terminal equipment performs the L1 measurement comprises:
   the terminal equipment performs the L1 measurement by using a measurement interval configured by the network device.
20. The method according to Supplement 14, wherein that the terminal equipment reports the L1 measurement result to the network device comprises:
   when a first condition is satisfied, the terminal equipment reports the L1 measurement result to the network device;
   the first condition includes at least one of the following:
      a candidate target cell is better than a serving cell by an offset;
      a beam of a candidate target cell is better than a beam of a serving cell by an offset;
      the serving cell is poor; and
      the beam of the serving cell is poor.
21. The method according to Supplement 20, wherein the method further comprises:
   when the terminal equipment receives a handover command, or when the first condition is unsatisfied, or when the number of times of reporting the L1 measurement result by the terminal equipment reaches a preset maximum, the terminal equipment stops reporting the L1 measurement result.
22. The method according to Supplement 14, wherein that the terminal equipment reports the L1 measurement result to the network device comprises:
   the terminal equipment reports an L1 measurement result of a candidate target cell that meets a condition; or
   the terminal equipment reports the L1 measurement result of a candidate target cell that meets a condition and a candidate target cell in a cell group where the candidate target cell that meets a condition is located.
23. The method according to Supplement 22, wherein
   the L1 measurement result of the candidate target cell is an L1 measurement result of a beam and/or reference signal of the candidate target cell.
24. The method according to Supplement 23, wherein
   the reference signal is an SSB and/or a CSI-RS.
25. The method according to Supplement 14, wherein the method further comprises:
   the terminal equipment receives first indication information transmitted by the network device; and
   the terminal equipment performs L1 measurement on a frequency of an inter-frequency candidate target cell or on an inter-frequency candidate target cell, according to the first indication information.
26. The method according to Supplement 14, wherein the method further comprises:
   the terminal equipment compares the measurement result of the serving cell with a pre-configured first threshold; and
   when the measurement result of the serving cell is worse than the first threshold, the terminal equipment performs L1 measurement on a frequency of an inter-frequency candidate target cell or on an inter-frequency candidate target cell.
27. The method according to Supplement 26, wherein
   the measurement result of the serving cell is a measurement result of a beam and/or reference signal of the serving cell.
28. The method according to Supplement 27, wherein
   the reference signal is an SSB and/or a CSI-RS.
29. A triggering method for an inter-cell mobility procedure, comprising:
   the terminal equipment reports an L3 measurement result of an inter-frequency candidate target cell to a second network device, the L3 measurement result being used for the second network device to indicate a first network device to trigger an L1 or L2 based inter-cell mobility procedure from a serving cell to a target cell, the second network device being a central unit (CU) in a communication system.
30. The method according to Supplement 29, wherein
   when the L1 measurement result associated with the inter-frequency candidate target cell is reported or satisfies a second condition or an L3 measurement result of the beam and/or reference signal of the inter-frequency candidate target cell satisfies a third condition, the terminal equipment reports the L3 measurement result to the second network device.
31. The method according to Supplement 29 or 30, wherein
   the first network device is a distributed unit (DU) in a communication system.
32. The method according to Supplement 30, wherein the second condition includes at least one of the following:
   the L1 measurement result of the cell associated with the inter-frequency candidate target cell is better than that of the serving cell by an offset;
   the L1 measurement result of a beam of the cell associated with the inter-frequency candidate target cell is better than that of a beam of the serving cell by an offset;
   the L1 measurement result of the serving cell is poor; and
   the L1 measurement result of the beam of the serving cell is poor.
33. The method according to Supplement 30, wherein the third condition includes at least one of the following:
   the L3 measurement result of the beam and/or reference signal of the inter-frequency candidate target cell is better than that of a special cell and/or a secondary cell by an offset; and/or
   the L3 measurement result of the beam and/or reference signal of the inter-frequency candidate target cell is better than a third threshold, and an L3 measurement result of a beam and/or reference signal of the special cell is worse than a fourth threshold.
34. The method according to Supplement 30, wherein the method further comprises:
   when the terminal equipment receives a handover command, or when the second condition is unsatisfied, or when the third condition is unsatisfied, or when the number of times of reporting the L3 measurement result by the terminal equipment reaches a preset maximum, the terminal equipment stops reporting the L3 measurement result.
35. A triggering method for an inter-cell mobility procedure, comprising:
   a terminal equipment reports an L1 measurement result to a network device, the L1 measurement result being associated with an inter-frequency candidate target cell and used for the network device to trigger an L1 or L2 based inter-cell mobility procedure from a serving cell to a target cell.
36. The method according to Supplement 35, wherein
   the L1 measurement result is an L1 measurement result of a cell associated with the inter-frequency candidate target cell.
37. The method according to Supplement 36, wherein
   if the first network device configures a candidate target cell for the terminal equipment and the candidate target cell is an inter-frequency cell, the cell associated with the inter-frequency candidate target cell is an intra-frequency cell associated with the inter-frequency cell; and
   if the first network device configures a candidate target cell group for the terminal equipment and the candidate target cell group includes an inter-frequency cell, the cell associated with the inter-frequency candidate target cell is an intra-frequency cell in the candidate target cell group or an intra-frequency cell in a cell group other than the candidate target cell group.
38. A network device, comprising a memory and a processor, the memory storing a computer program, and the processor being configured to execute the computer program to implement the method according to any one of Supplements 1 to 13.
39. A terminal equipment, comprising a memory and a processor, the memory storing a computer program, and the processor being configured to execute the computer program to implement the method according to any one of Supplements 14 to 37.
40. A communication system, comprising the network device according to Supplement 38 and the terminal equipment according to Supplement 39.

## Claims

1. A triggering apparatus for an inter-cell mobility procedure, wherein the apparatus comprises:
a receiving unit configured to receive measurement-related information, the measurement-related information including one of the following: a layer 1 measurement result by performing layer 1 measurement on a frequency of an inter-frequency candidate target cell or on an inter-frequency candidate target cell by a terminal equipment, an indication from a second network device based on a layer 3 measurement result by performing layer 3 measurement on a frequency of an inter-frequency candidate target cell or on an inter-frequency candidate target cell by the terminal equipment, or a layer 1 measurement result associated with a candidate target cell; and
a triggering unit configured to, based on the measurement-related information, trigger a layer 1 or layer 2 based inter-cell mobility procedure from a serving cell to a target cell.

2. The apparatus according to claim 1, wherein the apparatus further comprises:
a first transmitting unit configured to transmit first indication information to the terminal equipment, the first indication information indicating the terminal equipment to perform layer 1 measurement on the frequency of the inter-frequency candidate target cell or on the inter-frequency candidate target cell.

3. The apparatus according to claim 1, wherein the apparatus further comprises:
a second transmitting unit configured to transmit second indication information to the terminal equipment, the second indication information indicating the terminal equipment to perform layer 1 measurement by using an autonomous interval.

4. The apparatus according to claim 3, wherein
the autonomous interval refers to a time when the terminal equipment is not scheduled by a network.

5. The apparatus according to claim 1, wherein the apparatus further comprises:
a first configuring unit configured to configure a measurement interval for the terminal equipment, the measurement interval being used by the terminal equipment for performing the layer 1 measurement.

6. The apparatus according to claim 1, wherein
the receiving unit further receives third indication information transmitted by the second network device, the third indication information indicating whether to trigger the layer 1 or layer 2 based inter-cell mobility procedure from the serving cell to the target cell, and
the second network device is a central unit in a communication system.

7. The apparatus according to claim 1, wherein the first network device is a distributed unit in a communication system.

8. The apparatus according to claim 1, wherein the apparatus further comprises:
a second configuring unit configured to configure a candidate target cell or a candidate target cell group for the terminal equipment based on the layer 3 measurement result from the terminal equipment, the candidate target cell or a candidate target cell in the candidate target cell group and the service cell being of intra-frequency or inter-frequency.

9. The apparatus according to claim 1, wherein that triggering the layer 1 or layer 2 based inter-cell mobility procedure from the serving cell to the target cell comprises:
transmitting a layer 1 indication to the terminal equipment via the serving cell; and/or
transmitting a layer 2 indication to the terminal equipment via the serving cell.

10. The apparatus according to claim 1, wherein
the inter-frequency refers to a frequency that is different from a frequency of the serving cell;
the frequency being different including that center frequency points are different or subcarrier spacings are different.

11. The apparatus according to claim 1, wherein
the layer 1 measurement result is a layer 1 measurement result of a beam and/or a reference signal of a candidate target cell or a cell associated with the candidate target cell.

12. A triggering apparatus for an inter-cell mobility procedure, wherein the apparatus comprises:
a transmitting unit configured to report a layer 3 measurement result of an inter-frequency candidate target cell to a second network device, the layer 3 measurement result being used for the second network device to indicate a first network device to trigger a layer 1 or layer 2 based inter-cell mobility procedure from a serving cell to a target cell, the second network device being a central unit in a communication system.

13. The apparatus according to claim 12, wherein
when the layer 1 measurement result associated with the inter-frequency candidate target cell is reported or satisfies a second condition or a layer 3 measurement result of the beam and/or reference signal of the inter-frequency candidate target cell satisfies a third condition, the transmitting unit reports the layer 3 measurement result to the second network device.

14. The apparatus according to claim 12, wherein
the first network device is a distributed unit in a communication system.

15. The apparatus according to claim 13, wherein the second condition includes at least one of the following that:
the layer 1 measurement result of the cell associated with the inter-frequency candidate target cell is better than that of the serving cell by an offset;
the layer 1 measurement result of a beam of the cell associated with the inter-frequency candidate target cell is better than that of a beam of the serving cell by an offset;
the layer 1 measurement result of the serving cell is poor; and
the layer 1 measurement result of the beam of the serving cell is poor.

16. The apparatus according to claim 13, wherein the third condition includes at least one of the following that:
the layer 3 measurement result of the beam and/or reference signal of the inter-frequency candidate target cell is better than that of a special cell and/or a secondary cell by an offset; and/or
the layer 3 measurement result of the beam and/or reference signal of the inter-frequency candidate target cell is better than a third threshold, and a layer 3 measurement result of a beam and/or reference signal of the special cell is worse than a fourth threshold.

17. The apparatus according to claim 13, wherein
when the terminal equipment receives a handover command, or when the second condition is unsatisfied, or when the third condition is unsatisfied, or when the number of times of reporting the layer 3 measurement result by the terminal equipment reaches a preset maximum, the transmitting unit stops reporting the layer 3 measurement result.

18. A triggering apparatus for an inter-cell mobility procedure, wherein the apparatus comprises:
a transmitting unit configured to report a layer 1 measurement result to a network device, the layer 1 measurement result being associated with an inter-frequency candidate target cell and used for the network device to trigger a layer 1 or layer 2 based inter-cell mobility procedure from a serving cell to a target cell.

19. The apparatus according to claim 18, wherein
the layer 1 measurement result is a layer 1 measurement result of a cell associated with the inter-frequency candidate target cell.

20. The apparatus according to claim 19, wherein
if the first network device configures a candidate target cell for the terminal equipment and the candidate target cell is an inter-frequency cell, the cell associated with the inter-frequency candidate target cell is an intra-frequency cell associated with the inter-frequency cell; and
if the first network device configures a candidate target cell group for the terminal equipment and the candidate target cell group includes an inter-frequency cell, the cell associated with the inter-frequency candidate target cell is an intra-frequency cell in the candidate target cell group or an intra-frequency cell in a cell group other than the candidate target cell group.
